# EUROPÄISCHE PATENTSCHRIFT

(11) **EP 0 902 524 B1**
(45) Veröffentlichungstag und Bekanntmachung des Hinweises auf die Patenterteilung: **12.10.2011**
(21) Anmeldenummer: 98115353.9
(22) Anmeldetag: 14.08.1998
(51) Int. Cl.: H02K 13/10, H01R 39/54

(54) **Gleichstromelektromotor**
DC Motor
Moteur à courant continu

(30) Priorität: 15.09.1997 DE 19740551
(43) Veröffentlichungstag der Anmeldung: 17.03.1999
(73) Patentinhaber: INTERELECTRIC AG, CH-6072 Sachseln (CH)
(72) Erfinder: Steffan, Joachim, 6074 Giswil (CH); Wenger, Hansruedi, 6072 Sachseln (CH); Halter, André, 6074 Giswil (CH)
(74) Vertreter: Grünecker, Kinkeldey, Stockmair & Schwanhäusser Anwaltssozietät

(56) Entgegenhaltungen:
- EP-A- 0 714 159
- DE-A- 3 300 313
- US-A- 3 594 598
- GRAHAM: "BUILT-IN ARC SUPPRESSORS BOOST CUP-MOTOR LIFE" MACHINE DESIGN, Bd. 62, Nr. 4, 22. Februar 1990, Seiten 69-72, XP000102476 Cleveland,Ohio,US
- PATENT ABSTRACTS OF JAPAN vol. 6, no. 251 (E-147) [1129], 10. Dezember 1982 & JP 57 148560 A (MATSUSHITA DENKO KK), 13. September 1982

## Beschreibung

Die Erfindung bezieht sich auf Gleichstromelektromotoren, insbesondere mit kleinen Abmessungen, mit einer an einer Welle angebrachten Kollektorplatte, mehreren, von der Kollektorplatte gehaltenen und zu einer Kollektorhülse gruppierten Kollektordrähten und einer ebenfalls im Bereich der Kollektorplatte angeordneten Kondensatorscheibe, deren Kontaktflächen entsprechend zugeordnet mit jeweils mindestens einem zugehörigen Kollektordraht elektrisch in Verbindung stehen.

Solche Gleichstromelektromotoren mit Kondensatorscheiben werden überall dort eingesetzt, wo eine Verlängerung der Motorlebensdauer vorausgesetzt wird, da durch die Verwendung der Kondensatorscheibe eine geringere Funkenbildung am Kollektor auftritt. Solche Kondensatorscheiben (z.B. CLL-Scheiben) sind zumeist aus einer speziellen Keramik hergestellt und weisen geeignete Kontaktflächen auf. Bei bislang verwendeten Konstruktionen wurde die Kondensatorscheibe von vorne auf die Kollektorscheibe aufgesetzt und eine Verbindung durch eine separate Verdrahtung zwischen den Kollektordrähten und den Kontaktflächen der Kondensatorscheibe ermöglicht. Bei einer weiteren Ausgestaltung im Stand der Technik ist vorgesehen, dass die Kondensatorscheibe auf der Rückseite der Kollektorplatte aufgesetzt wurde und sternförmige Anschlussdrähte aufweist, die über den Außenumfang der Kollektorscheibe nach vorne gebogen wurden, so dass sie mit den Kollektordrähten In Kontakt gebracht wurden.

Bekannter Stand der Technik ist aus der DE 33 00 313 A1 und der JP 57 148 560 bekannt. EP0714159A2 und US3594598 offenbaren jeweils einen Gleichstromelektromotor gemäß dem Oberbegriff des Anspruchs 1.

Ein entscheidender Nachteil dieser Konstruktion besteht unter anderem darin, dass sie nicht für eine Verwendung von Motoren mit einem Durchmesser von kleiner als 15 mm aufgrund des Platzbedarfes geeignet sind; Darüber hinaus erfordert die Verbindungstechnik zwischen Kollektordrähten und Kondensatorscheibe einige Aufwendung, so dass Bestrebungen bestehen, diese zu vereinfachen.

Es ist daher die Aufgabe der vorliegenden Erfindung einen Gleichstromelektromotor der eingangs genannten Art bereitzustellen, der auch mit kleinen Außendurchmessern herstellbar und vereinfacht im Aufbau ist.

Diese Aufgabe wird erfindungsgemäß dadurch gelöst, dass die Kondensatorscheibe mit ihren Kontaktflächen unmittelbar auf die Kollektordrähte aufgesetzt und mit diesen verbunden ist und dass die Kollektorscheibe eine koaxial zur Welle angeordnete Ringaussparung aufweist, in der die ringförmige Kondensatorscheibe eingesetzt ist, wobei die freien Enden der von den einzelnen Kollektordrähten gebildeten Strahlen des Anschlusssterns in der Kollektorscheibe eingebettet sind. Die Erfindung verzichtet demnach auf zusätzliche Kontaktierungselemente zwischen der Kondensatorscheibe und den Kollektordrähten und setzt diese unmittelbar auf die Kollektordrähte auf. Hierdurch kann bereits der Durchmesserbereich, der von den Kollektordrähten abgedeckt wird, als Bauraum für die Kondensatorscheibe benutzt werden. Dadurch, dass im Stand der Technik die separaten Anschlussdrähte immer parallel an die Kollektordrähte herangeführt worden sind, stand dieser Durchmesserbereich nur eingeschränkt zur Verfügung. Hierdurch wird die Kondensatorscheibe vollständig in die Kollektorscheibe integriert, so dass eine platzsparende Anordnung geschaffen ist. Des weiteren besteht durch die Kollektorscheibe die Möglichkeit, eine genaue Positionierung durch eine entsprechend passgenaue Ausformung der Ringnut oder durch ähnliche Vorkehrungen an der Kollektorscheibe die Kondensatorscheibe auszurichten. Es wird gleichzeitig ein stabiler und ausreichend genau positionierter Anschlussstern geschaffen. Da die Kollektordrähte in aller Regel bei den kleinen Elektromotoren sehr filigran sind, können sie durch eine zusätzliche Sicherung an ihren freien Enden nicht aus Versehen umgebogen werden.

Gemäß einer weiteren Ausführungsform ist vorgesehen, dass die Kollektordrähte derart gruppiert sind, dass sie mit einem Abschnitt die Kollektorhülse und mit einem daran anschließenden Abschnitt einen Anschlussstern formen, wobei der Anschlussstern auf die Kondensatorscheibe aufgesetzt ist. Ein solcher Stern kann jegliche radiale Ausgestaltung aufweisen, so dass er beliebig an die Kontaktflächen der Kondensatorscheibe anpassbar ist.

Ein weiterer Vorteil besteht darin, dass die Kondensatorscheibe auf eine von der Kollektorhülse wegweisenden Rückseite des Anschlusssterns aufgesetzt ist. Dies hat den Vorteil, dass die Kollektordrähte an der Vorderseite mit der Wicklung verbunden werden können und die Kondensatorscheibe innerhalb des von der Wicklung eingeschlossenen Raums angeordnet werden kann. Des weiteren lässt sich bei einer solchen Ausgestaltung die Kondensatorscheibe besser mit den Anschlussdrähten zum elektrischen Anschluss an die Wicklung verbinden, da auf den gesamten mit der Kondensatorscheibe in Verbindung stehenden Abschnitt des Anschlusssterns zugegriffen werden kann.

Die Kollektordrähte können einen im wesentlichen parallel zur Welle verlaufenden Schenkel, der einen Bestandteil der Kollektorhülse bildet, und einen im wesentlichen dazu senkrechten Schenkel, der einen Bestandteil des Anschlusssterns bildet, aufweisen. Hierdurch weisen die Kollektordrähte eine L-Form auf, die sehr einfach herzustellen und durch relativ einfache Anordnung das Gruppieren zur Kollektorhülse und gleichzeitiges Ausformen des Anschlusssterns zulässt. Der senkrecht sich erstreckende Schenkel weist dann einfach radial nach außen, wodurch sich die Abstände zwischen diesen senkrechten Schenkeln nach außen vergrößern und eine ausreichende Isolierung zwischen diesen gegeben ist.

Vorteilhafterweise kann weiter vorgesehen sein, dass die Kollektorhülse auf der Vorderseite der Kollektorscheibe und die Aussparung auf der Rückseite der Kollektorscheibe angeordnet ist, wobei sich der Anschlussstern in die Aussparung erstreckt. Hierdurch ergeben sich in Verbindung mit der Ausgestaltung der Kollektorscheibe die Vorteile, dass die Kondensatorscheibe innerhalb des von der Wicklung umgebenen Raumes angeordnet ist, wobei die Kollektordrähte von der Kollektorscheibe derart gehalten werden, dass eine direkte Kontaktierung der Kondensatorscheibe mit den Kollektordrähten innerhalb der Aussparung unmittelbar gegeben ist.

Um ein günstiges Verbinden der Kollektordrähte mit der Kondensatorscheibe zu ermöglichen, können an der Vorderseite der Kollektorscheibe die Aussparung schneidende Zugriffsöffnungen zum Zugreifen auf die den Anschlussstern bildenden Schenkel der Kollektordrähte angeordnet sein. Hierdurch lässt sich auch z.B. ein Verbindungsverfahren automatisieren, da unmittelbar von der Vorderseite auf die Verbindungsstelle zugegriffen werden kann. In diesem Zusammenhang kann jedem Kollektordraht eine eigene Zugriffsöffnung zugeordnet sein, die im Abstand zum Außenrand der Kollektorscheibe angeordnet ist. Hierdurch wird die Kollektorscheibe speichenartig unterteilt, wodurch sie trotz der Zugriffsöffnungen eine ausreichende Stabilität erhält.

Damit bei einer Ausführungsform eine ausreichende Ausrichtung der Kollektorscheibe und somit eine Zuordnung der Kontaktstellen mit den Kollektordrähten gegeben ist, kann in der Aussparung ein Ausrichtvorsprung angeordnet sein, der in eine an der Kondensatorscheibe angeordneten Ausrichtaussparung eingreift.

Des weiteren kann in vorteilhafter Weise der Ausrichtvorsprung an einer Stelle innerhalb der Aussparung angeordnet sein, an der der freie Endbereich eines Kollektordrahtabschnitts am Anschlussstern von der Kollektorscheibe gehalten Ist und den Endbereich zusätzlich abstützt, wobei die Ausrichtaussparung am Außenumfang der Kondensatorscheibe angeordnet Ist. Dieser Ausrichtvorsprung erfüllt somit zwei Funktionen. Zum einen die der besseren Befestigung und Abstützung der freien Enden der Kollektordrähte, so dass diese auch bei Einwirkung bestimmter Kräfte, z.B. beim Verbinden der Kollektordrähte mit der Kondensatorscheibe ausreichend abgestützt sind. Zum anderen vereinfacht sich auch dadurch der Aufbau der Kondensatorscheibe, da diese zumeist aus Keramik besteht und Ausrichtaussparungen nur sehr schwer herstellbar sind. Durch die Anordnung der Ausrichtaussparung am Außenumfang lässt sich diese weiterhin einfach herstellen.

Hierbei ist es von weiterem Vorteil bei einer Variante, dass jedem freien Endbereich eines Kollektordrahtabschnittes am Anschlussstern ein Ausrichtvorsprung zugeordnet ist und die Kondensatorscheibe entsprechend viele Ausrichtaussparungen aufweist. Hierdurch Ist eine gleichmäßige Abstützung über den gesamten Anschlussbereich gegeben.

Günstigerweise kann die Kollektorscheibe durch Kunststoffspritzen hergestellt und die Kollektordrähte zumindest bereichsweise in der Kunststoffmasse eingebettet sein. Insbesondere bei kleinen Elektromotoren hat sich diese Herstellungsvariante als vorteilhaft herausgestellt, da die Kollektordrähte lediglich in die Form eingebracht und durch Einspritzen des Kunststoffs eine unmittelbare Verbindung mit der Kollektorscheibe eingehen. Des weiteren kann durch Kunststoffspritzgießen eine beliebige Ausgestaltung der Kollektorscheibe und Anformung an die Kollektordrähte sowie die Kondensatorscheibe erfolgen.

Als von besonderem Vorteil haben sich Ausführungsformen herausgestellt, bei denen die Kollektordrähte mit den Kontaktflächen der Kondensatorscheibe durch einen leitfähigen Hilfsstoff, Insbesondere Lötzinn, Lotpaste und/oder Lötkleber verbunden sind. Das Aufbringen eines solchen leitfähigen Hilfsstoffes lässt sich sehr einfach automatisieren und insbesondere bei der Variante, bei der von der Vorderseite zugängliche Zugriffsöffnungen an der Kollektorscheibe angeordnet sind, ist eine Vereinfachung des Befestigungsvorgangs ohne großen Aufwand erreichbar.

Im folgenden werden Ausführungsformen der vorliegenden Erfindung anhand einer Zeichnung naher erläutert. Es zeigen:
- Fig. 1: eine erste Variante eines Läufers für einen erfindungsgemäßen Gleich- stromelektromotor,
- Fig. 2: die Kollektorscheibe mit Kollektordrähten und angeordneter Welle im Quer- schnitt,
- Fig. 3: der Aufbau aus Figur 2 In einer Vorderansicht,
- Fig. 4: eine Zugriffsöffnung der Kollektorscheibe in einer vergrößerten Ansicht,
- Fig. 5: eine Kondensatorscheibe in einer vergrößerten Vorderansicht,
- Fig. 6: die Kondensatorscheibe aus Figur 5 im Halbschnitt,
- Fig. 7: eine zweite Ausführungsform eines Läufers für einen erfindungsgemäßen Gleichstromelektromotor im Vollschnitt,
- Fig. 8: die Kollektorscheibe mit Kollektordrähten und der Welle aus Figur 7 in einer vergrößerten Darstellung und
- Fig. 9: der Aufbau aus Figur 8 in einer Vorderansicht.

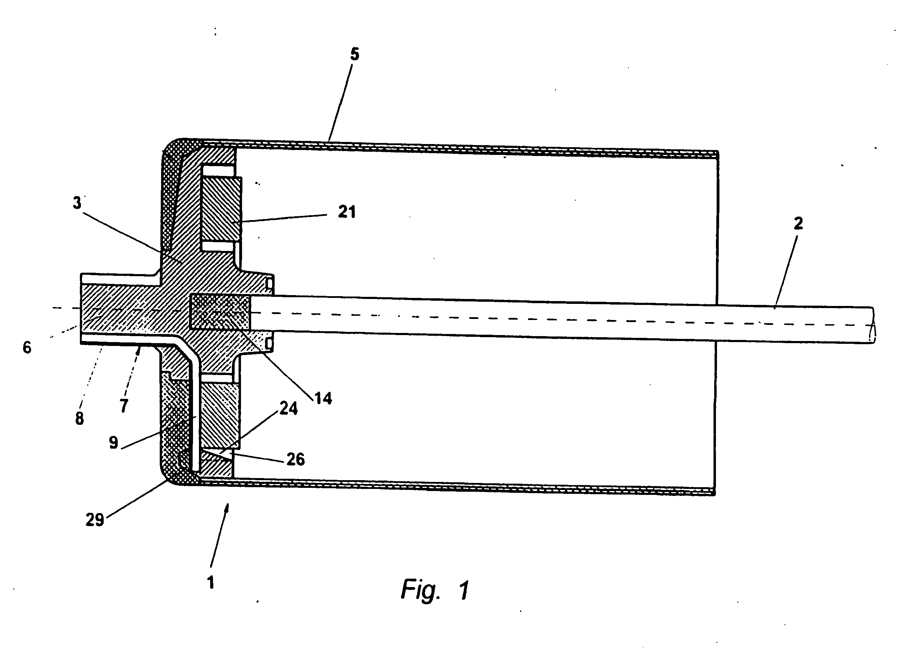

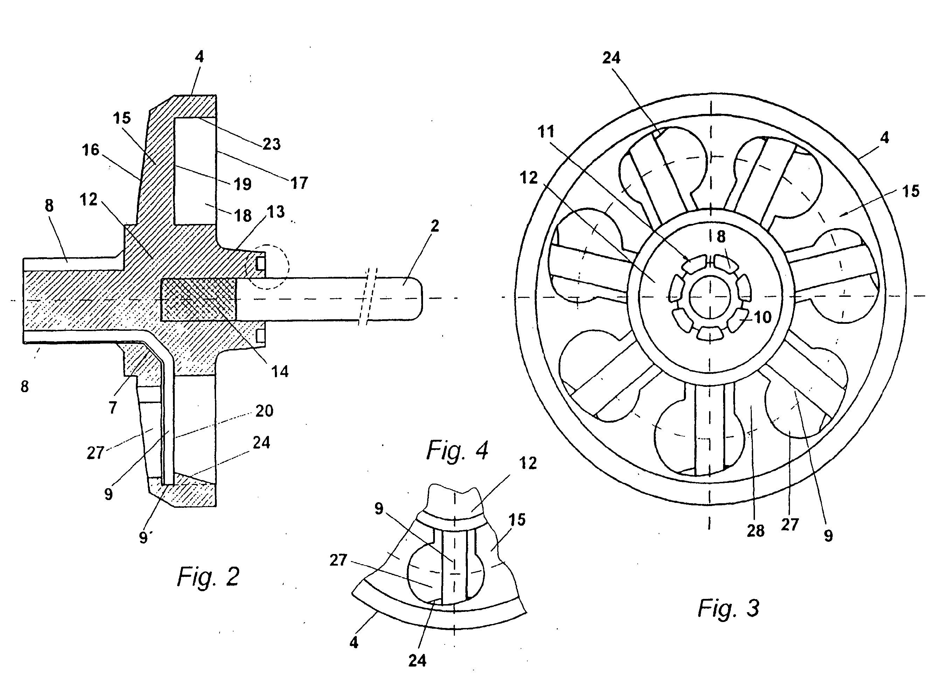

In der Figur 1 ist ein käfigloser Läufer 1 für einen Gleichstromelektromotor dargestellt. Der Läufer 1 wird in einem nicht dargestellten Gehäuse mit Eisenrückschluss und innenliegendem Permanentmagnet koaxial zur Welle 2 drehbar angeordnet. An einem Ende der Welle 2 ist eine aus Kunststoff bestehende Kollektorscheibe 3 angebracht, auf dessen zylindrischen Außenumfangbereich 4 (siehe auch Figuren 2 bis 4) eine hülsenförmige Läuferwicklung 5 koaxial zur Welle 2 befestigt Ist. Die Kollektorscheibe 3 weist einen über die Läuferwicklung 5 vorstehenden, im wesentlichen zylindrischen Fortsatz 6 auf, in dem die parallel zur Wellenachse angeordneten Schenkel 8 der Kollektordrähte 7 eingebettet sind. Die Kollektordrähte 7 weisen auch einen senkrecht zum Schenkel 8 angeordneten Schenkel 9 auf, der sich von der Wellenachse radial nach außen erstreckt. Hierdurch erhalt jeder Kollektordraht 7 in der Seitenansicht eine annähernde L-Form.

Bei dem gezeigten Ausführungsbeispiel sind in dieser Weise sieben Kollektordrähte 7 gleichmäßig verteilt an der Kollektorscheibe 3 angeordnet. Die parallelen Schenkel 8 der Kollektordrähte 7 sind derart In dem Fortsatz 6 eingebettet, dass sie mit ihrer Oberseite 10 nach außen blank liegen, so dass entsprechende Bürsten auf sie aufgesetzt werden können. Die parallelen Schenkel 8 der Kollektordrähte 7 bilden somit eine Kollektorhülse 11. In der Figur 3 ist ebenfalls zu erkennen, dass der Querschnitt der Kollektordrähte 7 im wesentlichen trapezförmig ist, wobei die längere Seite nach außen weist und die Außenseite 10 definiert. Die kürzere Seite ist in dem Fortsatz 6 fest eingebettet.

Jeder Kollektordraht 7 erstreckt sich über den Fortsatz 6 In einen Mittenbereich 12 der Kollektorschreibe 3, in dem die Drahte vollständig von Kunststoff umschlossen sind. In diesem Mittenbereich 12 befindet sich auch der Übergang der Kollektordrähte 7 vom parallelen Schenkel 8 in den senkrechten Schenkel 9. Die Kollektorscheibe 3 weist einen zylindrischen Absatz 13 mit einer Aufnahmebohrung auf, in die ein gerändelter Abschnitt 14 der Welle 2 eingepresst ist. Hierdurch wird eine drehfeste Verbindung zwischen Kollektorscheibe 3 und Welle 2 erreicht. Der radial zum Außenumfangbereich 4 führende Abschnitt 15 der Kollektorscheibe 3 weist eine von der Läuferwicklung 5 wegweisende Vorderseite 16 und eine in Richtung der Läuferwicklung 5 weisende Rückseite 17 auf. In der Rückseite 17 ist Im Abstand zum Außenumfangbereich 4 und zum zylindrischen Ansatz 13 eine ringförmige Aussparung 18 eingeformt ist, die koaxial zur Wellenachse angeordnet ist. Der Querschnitt der Aussparung 18 ist im wesentlichen rechteckförmig. In den Boden 19 der Aussparung 18 erstrecken sich die senkrechten Schenkel 9 der Kollektordrähte 7, so dass deren Rückseite 20 als Kontaktflächen in der Aussparung 18 angeordnet sind.

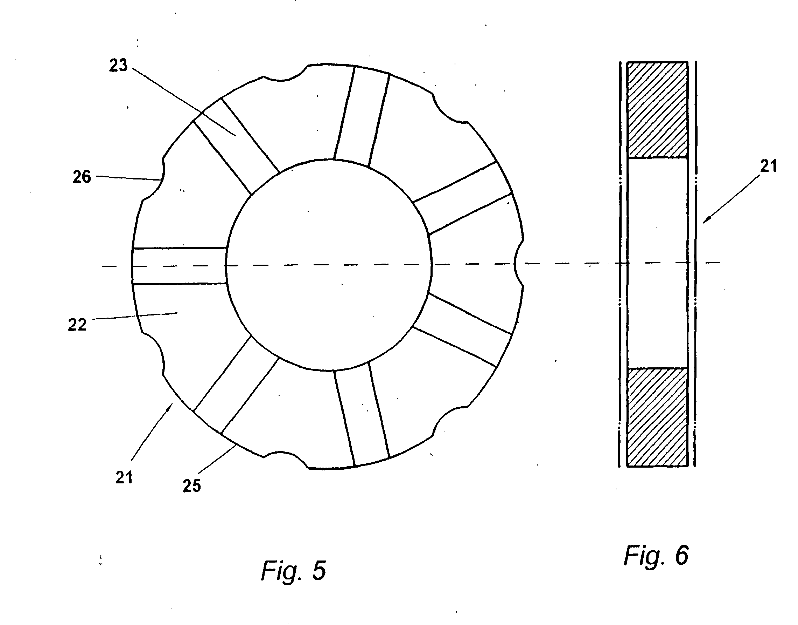

In dieser Aussparung 18 ist eine ringförmige Kondensatorscheibe 21 (siehe Figuren 5 und 6) angeordnet. Die Kondensatorscheibe 21 besteht aus einer speziellen Keramik und weist voneinander getrennte Kontaktflächen 22 auf. Diese Kontaktflächen 22 werden durch eine Versilberung der Oberfläche der Kondensatorscheibe 21 erzielt. Die Kontaktflächen 22 sind durch die freien Streifen 23 voneinander getrennt. Die Anordnung der Kondensatorscheibe 21 in der Aussparung 18 (siehe Figur 1) erfolgt derart, dass die Kontaktflächen 22 mit der Rückseite 22 mit den entsprechend zugeordneten Kollektordrähten 7 in Berührung kommen.

Damit die Kondensatorscheibe 21 optimal in der Aussparung 18 angeordnet und ausgerichtet ist, sind an der Außenwand 23 der Aussparung 18 In gleichmäßigem Abstand verteilt rampenförmige Ausrichtvorsprünge 24 vorgesehen. Die Ausrichtvorsprünge 24 befinden sich immer genau angrenzend an den freien Enden 9' der Kollektordrähte 7. Hierdurch erfolgt zusätzlich noch eine Abstützung der freien Enden 9' der Kollektordrähte 7, da in diesem Bereich eine Materialanhäufung erzeugt ist. Die Kondensatorscheibe 21 weist an ihrem Außenumfang 25 gleichmäßig verteilt an die Form der Ausrichtvorsprünge 24 angepasste Ausrichtaussparungen 26 auf. Die Kondensatorscheibe 21 wird so in die Aussparung 18 eingesetzt, dass die Ausrichtvorsprünge 24 genau In die Ausrichtaussparungen 26 in der Kondensatorscheibe 21 eingeschoben sind.

Die Kollektorscheibe 3 weist darüber hinaus an der Vorderseite 16 zur Aussparung 18 hin offene Zugriffsöffnungen 27 auf, die derart ausgestaltet sind, dass von der Vorderseite 16 her gesehen die senkrechten Schenkel 9 und die Kontaktflächen 22 der Kondensatorscheibe 21 sichtbar und zugänglich sind. In dem dargestellten Ausführungsbeispiel erstreckt sich die Zugriffsöffnung 27 von dem Mittenbereich 12 radial nach außen bis annähernd zu der Stelle, wo das freie Ende 9' der Kollektordrähte 7 in der Kollektorscheibe 3 eingebettet ist. Es bleibt gerade so viel Material stehen, dass eine sichere Fixierung des freien Endes 9' gewährleistet bleibt. Darüber hinaus ist die Zugriffsöffnung 27 seitlich etwas vergrößert, was Vorteile für die Verbindungstechnik zwischen Kondensatorscheibe 21 und Kollektorscheibe 7 bringt. Zwischen den einzelnen Zugriffsöffnungen 27 bleiben Speichen 28 stehen, die den Mittenbereich 12 mit dem Außenumfangsbereich 4 verbinden.

Die feste Verbindung zwischen dem senkrechten Schenkel 9 der Kollektordrähte 7 und den Kontaktflächen 22 der Kondensatorscheibe 1 kann auf verschiedene Weise erfolgen, z.B. durch Lötzinn, Lötpaste oder Leitkleber.

Durch die hier beschriebene Ausgestaltung kann dieser Verbindungshilfsstoff über die Zugriffsöffnung 27 von der Vorderseite 16 der Kollektorscheibe 3 eingebracht werden. Hierdurch vereinfacht sich die Verbindungstechnik maßgeblich, da die Kondensatorscheibe 21 lediglich von der Rückseite 17 her eingelegt und dann von der Vorderseite her mit einem entsprechendem Hilfsstoff die Verbindung hergestellt werden kann.

Insbesondere anhand der Figur 3 ist sehr gut zu erkennen, dass die Anordnung der senkrechten Schenkel 9 der Kollektordrähte 7 eine Art Sternform bilden, so dass von einem Anschlussstern gesprochen werden kann, dessen von den Rückseiten der senkrechten Schenkel 9 gebildeten Anschlussflächen parallel zu den Kontaktflächen 22 der Kondensatorscheibe 21 ausgerichtet sind, so dass diese nur auf diese Fläche aufgelegt und dann mit einem Hilfsstoff verbunden werden muss. Es wäre aber auch denkbar, dass bei entsprechender Befestigung der Kondensatorscheibe 21 ein ledigliches Aufdrücken erfolgt.

Anhand der Figur 1 ist noch zu erkennen, dass über entsprechende Anschlussdrähte 29 auch eine Verbindung zwischen den Kollektordrähten 7 und der Läuferwicklung 5 hergestellt wird. Hierdurch steht dann auch gleichzeitig die Kondensatorscheibe 21 mit der Läuferwicklung 5 in Verbindung.

Im folgenden wird die Wirkungs- und Funktionsweise der vorliegenden Erfindung näher erläutert.

Durch die Tatsache, dass die Kondensatorscheibe 21 in einfacher Weise in die Aussparung 18 einsetzbar und durch die Ausrichtaussparung 26 zusammen mit den Ausrichtvorsprüngen 24 sehr leicht ausgerichtet ist, kommt es zu einer direkten Kontaktierung zwischen der Rückseite 9 der Kollektordrähte 7 und den Kontaktflächen 22 der Kondensatorscheibe 21. Durch Einbringen von einem Verbindungshilfsstoff über die Zugriffsöffnung 27 wird dann eine feste Verbindung zwischen den Kollektordrähten 7 und der Kondensatorscheibe 21 hergestellt. Diese Vorgehensweise hat gegenüber bislang verwendeten Verbindungstechniken im Stand der Technik erhebliche Vorteile, da sie wesentlich einfacher ausführbar ist und einer weniger aufwendigen Konstruktion zugrundeliegt.

Dadurch, dass sich die Kondensatorscheibe 21 im wesentlichen innerhalb des von den Kollektordrähten abgedeckten Durchmesserbereiches befindet, nimmt diese Verbindungstechnik nur einen relativ geringen Bauraum ein. Das heißt, dass die freien Enden 9' der Kollektordrähte einen Durchmesser definieren, der größer ist, als der Außendurchmesser der Kondensatorscheibe 21. Dies hat zur Folge, dass Läufer 1 mit äußerst kleinem Durchmesser herstellbar sind, was wiederum zu Elektromotoren mit kleinen Durchmessern führt. Bislang konnten Gleichstromelektromotoren mit Kondensatorscheiben 21 mit Durchmessern von weniger als 15 mm nicht hergestellt werden. Die vorliegende Erfindung lässt nunmehr selbst Ausgestaltungen von derartigen Elektromotoren mit geringerem Durchmesser zu. Die Kondensatorscheibe 21 hat den Vorteil, dass die Lebensdauer der Gleichstromelektromotoren mit eisenlosem Läufer 1 und Kollektor wesentlich erhöht ist, da es zu geringerer Funkenbildung kommt.

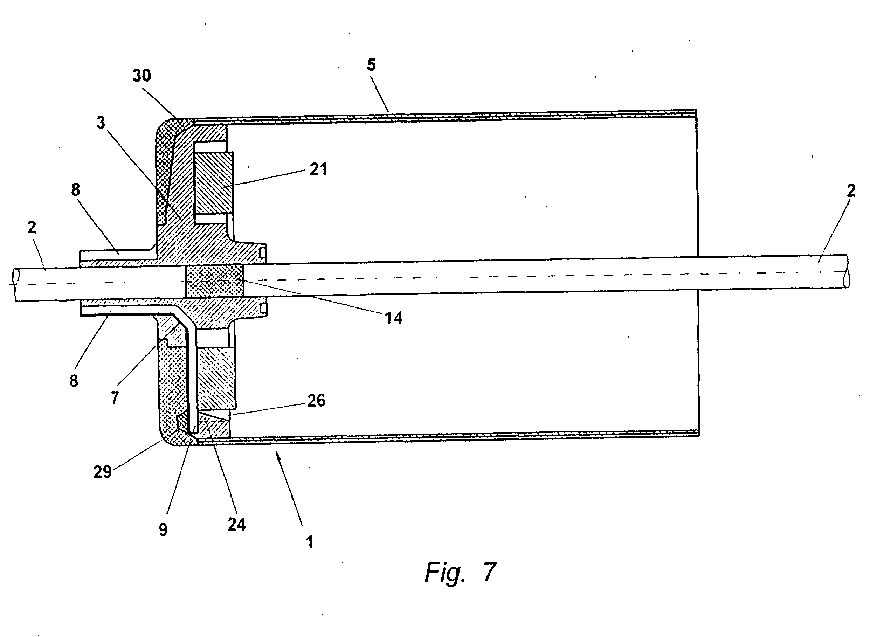

Anhand der Figuren 7 bis 9 wird nunmehr ein zweites Ausführungsbeispiel der vorliegenden Erfindung näher erläutert. Es wird im folgenden nur auf die wesentlichen Unterschiede zum vorangegangenen Ausführungsbeispiel Bezug genommen, so dass die obige Beschreibung weitgehenst auch auf dieses Ausführungsbeispiel zutrifft.

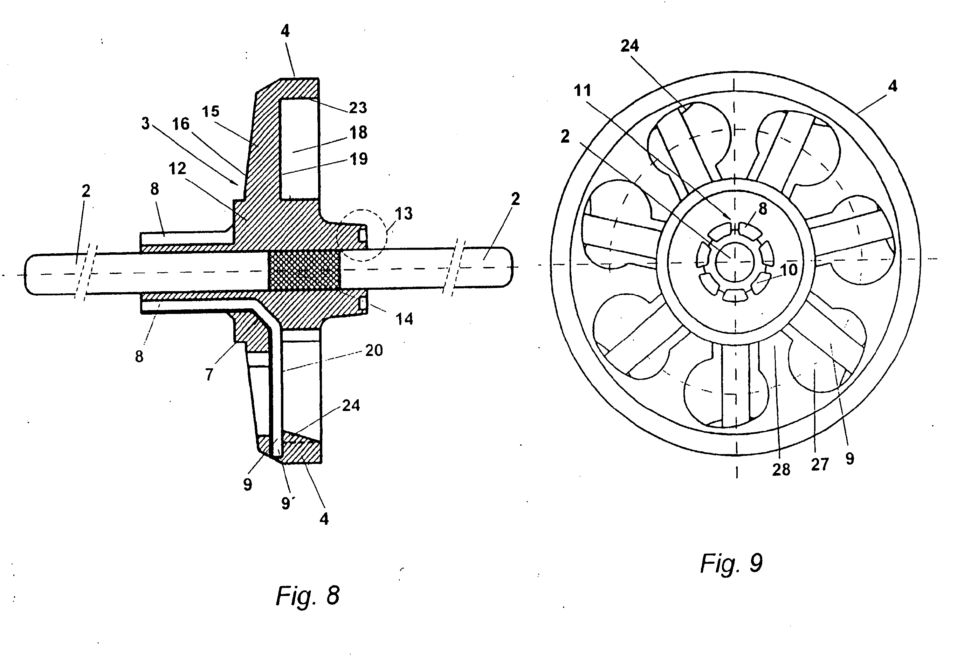

Der Hauptunterschied besteht darin, dass die Welle 2 sich durch die Kollektorscheibe 3 und somit dem Fortsatz 6 hindurcherstreckt, so dass die Welle 2 auch innerhalb der Kollektorhülse 11 angeordnet ist. Hierdurch kann z.B. auch eine Lagerung auf dem, in Figur 8 auf der linken Seite gezeigten Wellenansatz erfolgen. Bis auf diesen Unterschied ist der ansonstige Aufbau gleich mit dem vorangegangen Ausführungsbeispiel.

## Patentansprüche

1. Gleichstromelektromotor, insbesondere mit kleinen Abmessungen, mit einer an einer Welle (2) angebrachten Kollektorscheibe (3), mehreren, von der Kollektorscheibe (3) gehaltenen, und zu einer Kollektorhülse (11) gruppierten Kollektordrähten (7) und einer ebenfalls im Bereich der Kollektorscheibe (3) angeordneten ringförmigen Kondensatorscheibe (21), deren Kontaktfläche (22) entsprechend zugeordnet mit jeweils mindestens einem zugehörigen Kollektordraht (7) elektrisch in Verbindung steht, wobei die Kondensatorscheibe (21) mit ihren Kontaktflächen (22) unmittelbar auf die Kollektordrähte (7) aufgesetzt und mit diesen verbunden ist,
**dadurch gekennzeichnet, dass** die Kollektorscheibe (3) eine koaxial zur Welle (2) angeordnete Ringaussparung (18) aufweist, in der die Kondensatorscheibe (21) eingesetzt ist, wobei die freien Enden (9') der von den einzelnen Kollektordrähten (7) gebildeten Strahlen eines Anschlusssterns in der Kollektorscheibe eingebettet sind.

2. Gleichstromelektromotor nach Anspruch 1,
**dadurch gekennzeichnet, dass** die Kollektordrähte (7) derart gruppiert sind, dass sie mit einem Abschnitt (8) die Kollektorhülse (11) und mit einem daran anschließenden Abschnitt den Anschlussstern formen, wobei der Anschlussstern auf die Kondensatorscheibe (21) aufgesetzt ist.

3. Gleichstromelektromotor nach Anspruch 1 oder 2,
**dadurch gekennzeichnet, dass** die Kondensatorscheibe (21) auf eine von der Kollektorhülse (11) wegweisenden Rückseite (20) des Anschlusssterns aufgesetzt ist.

4. Gleichstromelektromotor nach einem der Ansprüche 1 bis 3,
**dadurch gekennzeichnet, dass** die Kollektordrähte (7) einen im wesentlichen parallel zur Welle (2) verlaufenden Schenkel (8), der einen Bestandteil der Kollektorhülse (11) bildet, und einen im wesentlichen senkrechten Schenkel (9), der einen Bestandteil des Anschlusssterns bildet, aufweist.

5. Gleichstromelektromotor nach einem der Ansprüche 1 bis 4,
**dadurch gekennzeichnet, dass** die Kollektorhülse (11) auf der Vorderseite (16) der Kollektorscheibe (3) und die Aussparung (18) auf der Rückseite (17) der Kollektorscheibe (3) angeordnet ist, wobei sich der Anschlussstern in die Aussparung (18) erstreckt.

6. Gleichstromelektromotor nach einem der Ansprüche 1 bis 5,
**dadurch gekennzeichnet, dass** an der Vorderseite (16) der Kollektorscheibe (3) die Aussparung (18) schneidende Zugriffsöffnungen (27) zum Zugreifen auf die den Anschlussstern bildenden Schenkel (9) der Kollektordrähte (7) angeordnet sind.

7. Gleichstromelektromotor nach Anspruch 6,
**dadurch gekennzeichnet, dass** jedem Kollektordraht (7) eine eigene Zugriffsöffnung (27) zugeordnet ist, die im Abstand zum Außenrand (4) der Kollektorscheibe (3) angeordnet ist.

8. Gleichstromelektromotor nach einem der Ansprüche 1 bis 7,
**dadurch gekennzeichnet, dass** in der Aussparung (18) ein Ausrichtvorsprung (24) angeordnet ist, der in eine an der Kondensatorscheibe (21) angeordneten Ausrichtaussparung (26) eingreift.

9. Gleichstromelektromotor nach Anspruch 8,
**dadurch gekennzeichnet, dass** der Ausrichtvorsprung (24) an einer Stelle innerhalb der Aussparung (18) angeordnet ist, an der der freie Endbereich (9') eines Kollektordrahtabschnitts (9) am Anschlussstern von der Kollektorscheibe (3) gehalten ist und den Endbereich (9') zusätzlich abstützt, wobei die Ausrichtaussparung (26) am Außenumfang (25) der Kondensatorscheibe (21) angeordnet ist.

10. Gleichstromelektromotor nach Anspruch 9,
**dadurch gekennzeichnet, dass** jedem freien Endbereich (9') eines Kollektordrahtabschnitts (9) am Anschlussstern ein Ausrichtvorsprung (24) zugeordnet ist und die Kondensatorscheibe (21) entsprechend viele Ausrichtaussparungen (26) aufweist.

11. Gleichstromelektromotor nach einem der Ansprüche 1 bis 10,
**dadurch gekennzeichnet, dass** die Kollektorscheibe (21) durch Kunststoffspritzen hergestellt und die Kollektordrähte (7) zumindest bereichsweise in der Kunststoffmasse eingebettet sind.

12. Gleichstromelektromotor nach einem der Ansprüche 1 bis 11,
**dadurch gekennzeichnet, dass** die Kollektordrahte (7) mit den Kontaktflächen (22) der Kondensatorscheibe (21) durch einen leitfähigen Hilfsstoff, insbesondere Lötzinn, Lötpaste und/oder Leitkleber verbunden sind.

13. Gleichstromelektromotor nach einem der Ansprüche 6 bis 12,
**dadurch gekennzeichnet, dass** die Zugriffsöffnung (27) seitlich etwas vergrößert ausgestaltet ist.

## Claims

1. DC motor, in particular of small dimensions, with a collector disc (3) mounted on a shaft (2), several collector wires (7) held by the collector disc (3) and grouped to form a collector sleeve (11), and an annular capacitor disc (21) likewise disposed in the region of the collector disc (3), the contact surface (22) of which is electrically connected to at least one specifically assigned co-operating collector wire (7), and the capacitor disc (21) is placed directly onto the collector wires (7) by its contact surfaces (22) and connected to them,
**characterised in that** the collector disc (3) has an annular recess (18) disposed coaxially with the shaft (2) in which the capacitor disc (21) is inserted, and the free ends (9') of the tips of a connection star formed by the individual collector wires (7) are embedded in the collector disc.

2. DC motor as claimed in claim 1,
**characterised in that** the collector wires (7) are grouped so that they form the collector sleeve (11) with one portion (8) and the connection star with an adjoining portion, and the connection star is placed on the capacitor disc (21).

3. DC motor as claimed in claim 1 or 2, **characterised in that** the capacitor disc (21) is placed on a rear face (20) of the connection star pointing away from the collector sleeve (11).

4. DC motor as claimed in one of claims 1 to 3, **characterised in that** the collector wires (7) have a leg (8) extending essentially parallel with the shaft (2) forming a part of the collector sleeve (11) and an essentially perpendicular leg (9) forming a part of the connection star.

5. DC motor as claimed in one of claims 1 to 4, **characterised in that** the collector sleeve (11) is disposed on the front face (16) of the collector disc (3) and the recess (18) is disposed on the rear face (17) of the collector disc (3), and the connection star extends into the recess (18).

6. DC motor as claimed in one of claims 1 to 5, **characterised in that** access orifices (27) are disposed on the front face (16) of the collector disc (3) intersecting the recess (18) for accessing the legs (9) of the connector wires (7) forming the connection star.

7. DC motor as claimed in claim 6,
**characterised in that** a separate access orifice (27) disposed at a distance from the outer edge (4) of the collector disc (3) is assigned to every collector wire (7).

8. DC motor as claimed in one of claims 1 to 7, **characterised in that** an alignment projection (24) is disposed in the recess (18) which locates in an alignment recess (26) disposed on the capacitor disc (21).

9. DC motor as claimed in claim 8, **characterised in that** the alignment projection (24) is disposed at a point inside the recess (18) at which the free end region (9') of a collector wire portion (9) on the connection star is held by the collector disc (3) and additionally supports the end region (9'), and the alignment recess (26) is disposed on the external circumference (25) of the capacitor disc (21).

10. DC motor as claimed in claim 9, **characterised in that** an alignment projection (24) is assigned to every free end region (9') of a collector wire portion (9) on the connection star and the capacitor disc (21) has a corresponding number of alignment recesses (26).

11. DC motor as claimed in one of claims 1 to 10, **characterised in that** the collector disc (21) is produced by plastic injection moulding and at least certain regions of the collector wires (7) are embedded in the plastic compound.

12. DC motor as claimed in one of claims 1 to 11, **characterised in that** the collector wires (7) are connected to the contact surfaces (22) of the capacitor disc (21) by means of a conductive auxiliary material, in particular solder, solder paste and/or conductive glue.

13. DC motor as claimed in one of claims 6 to 12, **characterised in that** the access orifices (27) is of a slightly larger design at the side.

## Revendications

1. Moteur électrique à courant continu, en particulier de petites dimensions, avec une plaque collectrice (3) qui est montée sur un arbre (2), plusieurs fils collecteurs (7) qui sont tenus par la plaque collectrice (3) et qui sont groupés en un manchon collecteur (11), et une plaque annulaire formant condensateur (21) qui est elle aussi disposée dans la zone de la plaque collectrice (3) et dont la surface de contact (22), associée en conséquence, est reliée électriquement à au moins un fil collecteur (7) correspondant, étant précisé que la plaque formant condensateur (21) est posée directement, avec ses surfaces de contact (22), sur les fils collecteurs (7) et est reliée à ceux-ci,
**caractérisé en ce que** la plaque collectrice (3) présente un creux annulaire (18) qui est disposé coaxialement par rapport à l'arbre (2) et dans lequel est insérée la plaque formant condensateur (21), étant précisé que les extrémités libres (9') des faisceaux d'un raccordement en étoile qui sont formés par les fils collecteurs (7) individuels sont encastrées dans la plaque collectrice.

2. Moteur électrique à courant continu selon la revendication 1, **caractérisé en ce que** les fils collecteurs (7) sont groupés de telle sorte qu'ils forment avec une partie (8) le manchon collecteur (11), et avec une partie suivante le raccordement en étoile, étant précisé que le raccordement en étoile est posé sur la plaque formant condensateur (21).

3. Moteur électrique à courant continu selon la revendication 1 ou 2, **caractérisé en ce que** la plaque formant condensateur (21) est posée sur la face arrière (20) du raccordement en étoile qui est opposée au manchon collecteur (11).

4. Moteur électrique à courant continu selon l'une des revendications 1 à 3, **caractérisé en ce que** les fils collecteurs (7) comportent une branche (8) qui est globalement parallèle à l'arbre (2) et qui fait partie du manchon collecteur (11), et une branche (9) globalement perpendiculaire qui fait partie du raccordement en étoile.

5. Moteur électrique à courant continu selon l'une des revendications 1 à 4, **caractérisé en ce que** le manchon collecteur (11) est disposé sur la face avant (16) de la plaque collectrice (3), et le creux (18) sur la face arrière (17) de la plaque collectrice (3), étant précisé que le raccordement en étoile s'étend dans le creux (18).

6. Moteur électrique à courant continu selon l'une des revendications 1 à 5, **caractérisé en ce qu'**il est prévu sur la face avant (16) de la plaque collectrice (3) des ouvertures d'accès (27) qui coupent le creux (18) pour l'accès aux branches (9) des fils collecteurs (7) qui forment le raccordement en étoile.

7. Moteur électrique à courant continu selon la revendication 6, **caractérisé en ce qu'**il est prévu, associée à chaque fil collecteur (7), une ouverture d'accès individuelle (27) qui est disposée à une certaine distance du bord extérieur (4) du disque collecteur (3).

8. Moteur électrique à courant continu selon l'une des revendications 1 à 7, **caractérisé en ce qu'**il est prévu dans le creux (18) une saillie d'alignement (24) qui pénètre dans un creux d'alignement (26) disposé sur la plaque formant condensateur (21).

9. Moteur électrique à courant continu selon la revendication 8, **caractérisé en ce que** la saillie d'alignement (24) est disposée à un endroit à l'intérieur du creux (18) où la zone d'extrémité libre (9') d'une partie de fil collecteur (9) est fixée au raccordement en étoile par la plaque collectrice (3), et offre un support supplémentaire de la zone d'extrémité (9'), étant précisé que le creux d'alignement (26) est disposé sur la circonférence extérieure (25) de la plaque formant condensateur (21).

10. Moteur électrique à courant continu selon la revendication 9, **caractérisé en ce qu'**il est prévu, associée à chaque zone d'extrémité libre (9') d'une partie de fil collecteur (9) sur le raccordement en étoile, une saillie d'alignement (24), et la plaque formant condensateur (21) présente un nombre correspondant de creux d'alignement (26).

11. Moteur électrique à courant continu selon l'une des revendications 1 à 10, **caractérisé en ce que** la plaque formant collecteur (21) est fabriquée par injection de matière plastique, et les fils collecteurs (7) sont encastrés, au moins par zones, dans la masse de matière plastique.

12. Moteur électrique à courant continu selon l'une des revendications 1 à 11, **caractérisé en ce que** les fils collecteurs (7) sont reliés aux surfaces de contact (22) de la plaque formant condensateur (21) par un agent auxiliaire conducteur, en particulier de l'étain de brasage, de la pâte de brasage et/ou une colle conductrice.

13. Moteur électrique à courant continu selon l'une des revendications 6 à 12, **caractérisé en ce que** l'ouverture d'accès (27) est un peu agrandie latéralement.
